# EUROPEAN PATENT APPLICATION

(11) **EP 1 280 106 A2**
(43) Date of publication of application: **29.01.2003**
(21) Application number: 01307485.1
(22) Date of filing: 03.09.2001
(51) Int. Cl.: G06T 9/00

(54) **Apparatus for digital image compression**

(30) Priority: 18.07.2001 JP 2001217512
(71) Applicant: Hitachi Ltd., Tokyo (JP)
(72) Inventor: Motosu, Akira, Hitachi, Ltd., I.P.G., Chiyoda-ku, Tokyo 100-8220 (JP); Arai, Hideo, Hitachi, Ltd., I.P.G., Chiyoda-ku, Tokyo 100-8220 (JP)
(74) Representative: Calderbank, Thomas Roger

(57) **Abstract**

In the coding of a dynamic image signal that conforms to the MPEG-2 Standard, when one-picture two-path coding is performed, the capacity of a memory for storing one-picture image data is reduced while lowering a throughput to be executed repetitively. Further, a throughput for estimating a generated code amount is reduced. This dynamic image compression coding apparatus has a memory that splits quantization processing into division processing using a quantization matrix and division processing using a quantization scale and temporarily stores one-picture data after quantization using the quantization matrix. In the first coding performed for estimating a code amount generated every macro block, the quantization processing is performed using a bit shift instead of division. Further, round-off processing in the quantization processing is substituted for round-down processing.

## Description

The present invention relates to a dynamic image coding method that encodes a digital dynamic image signal with high efficiency, and, more particularly, to a code amount control method.

As a typical system that compresses and encodes a dynamic image, the Dynamic Image Compression Standard H.262 (alias MPEG-2) defined in the "ITU-T White Book, Audio-Visual/Multimedia-Related (Series H) Recommendations (published on February 18, 1995 by The ITU Association of Japan)". According to MPEG-2 (Moving Picture Experts Group Phase 2), dynamic image information is compressed by deleting redundant information contained in the dynamic image information and information that is not significant for characteristics of the visual sensation of a human being. A general coding method according to MPEG-2 is described below. First, a static image (hereinafter referred to as a "picture") that constructs a dynamic image is split into a predetermined square area (hereinafter referred to as a "macro block"). Then a motion that uses correlativity between the pictures is compensated. Subsequently, a DCT (discrete cosine transform) operation is performed every macro block. The DCT operation is a type of orthogonal transform and transforms a dynamic image signal of a two-dimensional space component into a two-dimensional frequency component. Next, the data after the DCT operation is quantized. Quantization divides the data after the DCT operation by a divisor (hereinafter referred to as a "quantization step"). Finally, a variable length coding is performed using the occurrence probability of a code and coded data (also referred to as a "bit stream") is obtained.

Hereupon, a code amount must be controlled in order to record a bit stream obtained by encoding data according to MPEG-2 in a medium of which capacity is limited or send it via a transmission line that is restricted in a transfer rate. The code amount in the coding of MPEG-2 is controlled by the operation of a quantization step. As the quantization step increases, the code amount decreases. However, quantization distortion increases and picture quality deteriorates. Accordingly, it is important that the quantization step is suitably adjusted regarding the code amount control in the MPEG-2 coding. Regarding this point, the following proposals are presented.

For example, in JP-A No. Hei 7-147679 (hereinafter referred to as the "first document"), an art of controlling the code amount of a dynamic image signal to which thinning out of a frame applies is proposed. This art adjusts a quantization characteristic using spare time caused by the frame thinning-out so that the code amount of a frame image to be encoded can be a value approximate to a target code amount. Specifically, dynamic image data is DCT-operated and stored in a frame memory. At the same time, first quantization is performed using a first quantization characteristic and variable length coding is performed, then coded data is stored in a first buffer memory. Subsequently, a second quantization characteristic is selected in accordance with this coded data and second quantization is performed, using the second quantization characteristic, to a DCT coefficient stored in the frame memory. Then the variable length coding is performed and the coded data is stored in a second buffer memory. Subsequently, both the coded data stored in the first buffer memory and the second buffer memory are compared and the coded data more approximate to the target code amount is specified as compressed data.

In JP-A No. Hei 10-191343 (hereinafter referred to as the "second document"), an art of correctly estimating a code amount that will be generated in each macro block and distributing an appropriate target code amount to each macro block, then suitably controlling a quantization step is proposed. This art consists of an encoder and an estimation system. The encoder adds a binary search unit to an almost regular MPEG-2. The estimation system is provided with a plurality of quantization units, a plurality of generated code length count units, and a coding allocation unit. First, the estimation system performs first coding to graphic data using a plurality of different quantization steps and calculates a target data amount for each macro block based on a generated code amount. Next, the binary search unit obtains a quantization step of almost equalizing the data amount and the target data amount after coding and performs second coding by the encoder.

However, both the first and second documents leave the following problems.

The art described in the first document stores a signal after DCT processing in a memory and repeats quantization processing and coding processing twice. In the quantization processing, division is performed using a quantization step. The quantization step is assigned as a product between a matrix element of a quantization matrix and a quantization scale. The quantization matrix enables efficient coding using quantization sensitivity every spatial frequency on characteristics of the visual sensation of a human being. The quantization scale enables a change in a local quantization step that corresponds to the control of a code amount. Hereupon, the quantization scale is variable every macro block, whereas the quantization matrix is invariable in a picture. Accordingly, in the second quantization processing, it is not necessary to repeat the operation regarding the quantization matrix in which there is no change between the first and second quantization processing.

The art described in the second document performs quantization processing and coding processing by an estimation system and then re-executes the quantization processing and coding processing by an encoder. Here, in the quantization processing, both the estimation system and the encoder perform division using the quantization step. Accordingly, in the same manner as the first document, it is not necessary to perform twice the operation regarding a quantization matrix in which there is no change between the estimation system and the encoder in each quantization processing.

A first problem the present invention tries to solve is to reduce a throughput to be executed when a code amount is controlled.

Hereupon, as described above, there are two methods of controlling the code amount. One of them repeats the quantization processing and the coding processing as described in the first document and the other re-executes the quantization processing and the coding processing by the encoder after the quantization processing and the coding processing are executed by the estimation system as described in the second document. The quantization processing in MPEG-2 includes division processing as described above. Since division is enabled by repeating subtraction, a throughput increases considerably compared with addition and subtraction or a logical operation. In particular, since the art described in the second document performs quantization processing multiple times by a plurality of quantization units provided in the estimation system, the throughput becomes enormous.

A second problem the present invention tries to solve is to reduce a throughput of an estimation system correctly while estimating a generated code amount when the estimation system is provided and the code amount is controlled.

The present invention, in order to solve a first problem, splits quantization processing into two steps of first quantization performed using a quantization matrix and second quantization performed using a quantization scale. Further, the present invention is provided with a memory that stores a one-picture image signal between the first quantization and the second quantization.

A code amount is controlled by controlling the quantization scale of the second quantization. The quantization scale is controlled in two methods of repeating the second quantization and providing an estimation system.

In particular, when the code amount is controlled by providing the estimation system, the present invention, in order to solve a second problem, has a bit shift means instead of a division means in multiple quantization means for correctly estimating the code amount generated every macro block. Further, it has a round-down means for a residue instead of a round-off means for the residue.

### IN THE DRAWINGS:

Preferred embodiments of the present invention will be described in detail based on the followings, wherein:
Fig. 1 is a block diagram according to a first embodiment and a fifth embodiment;
Fig. 2 is a block diagram according to a second embodiment and a third embodiment;
Fig. 3 is a block diagram showing a second quantization unit according to the second embodiment;
Fig. 4 is an estimation graph of a quantization scale and a generated code amount according to the second embodiment and the third embodiment;
Fig. 5 is a block diagram showing the second quantization unit according to the third embodiment;
Fig. 6 is a block diagram according to a fourth embodiment;
Fig. 7 is an estimation graph of the quantization scale and the generated code amount according to the fourth embodiment; and
Fig. 8 is a block diagram according to a sixth embodiment.

A first embodiment of a dynamic image compression coding apparatus according to the present invention is described. The first embodiment applies a means for solving a first problem to an MPEG-2 real-time coding apparatus by an ordinary fixed bit rate control system.

In the MPEG-2 Standard, a quantization scale code embedded in a bit stream is not used for reverse quantization processing as it is, and the quantization scale code is converted to a quantization scale in accordance with a table defined in the standard when it is used. Two types of conversion tables from the quantization scale code to the quantization scale are prepared and can be selected for every picture. Either table may also be used. However, for all the embodiments of the present invention, in the two types of the tables, the table in which the quantization scale is set to the value twice the quantization scale code should be used in all pictures. The quantization scale that can be used in this table is an even number from 2 to 62.

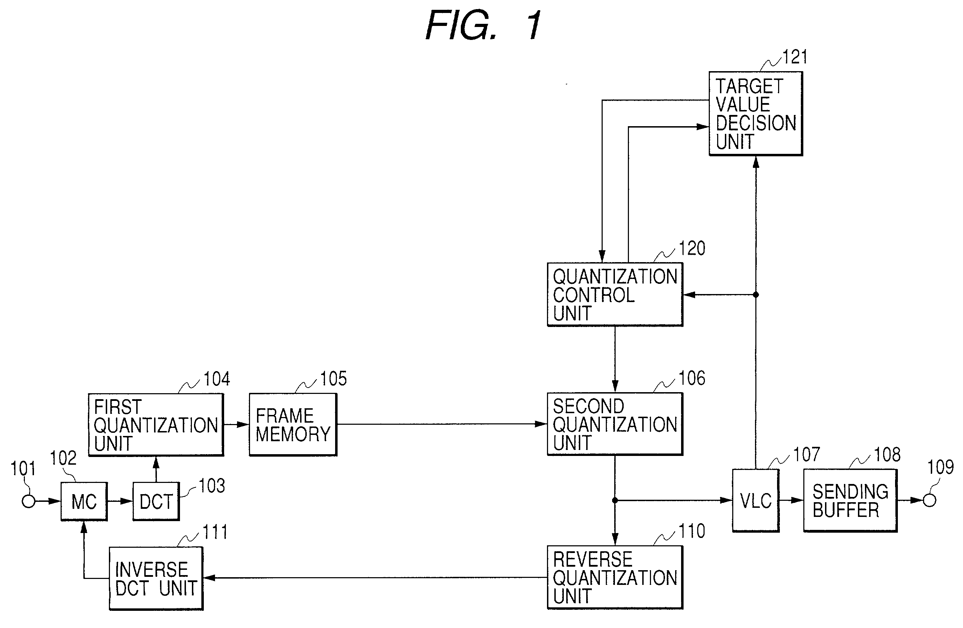

Fig. 1 shows a block diagram of the dynamic image compression coding apparatus of the first embodiment. The dynamic image compression coding apparatus of Fig. 1 is provided with a digital dynamic image input terminal 101, an MC unit 102 that is a motion compensation means, a DCT unit 103 that is a DCT conversion means, a first quantization unit 104 that is a first quantization means, a frame memory 105 that is a storage means, a second quantization unit 106 that is a second quantization means, a VLC unit 107 that is a coding means, a sending buffer 108, a bit stream output terminal 109, a reverse quantization unit 110, an inverse DCT unit 111, a quantization control unit 120 that is a quantization control means, and a target value decision unit 121 that is a target code amount decision means. The MC is an abbreviation of motion compensation, and the VLC is an abbreviation of variable length coding. A combination of the quantization control unit 120 and the target value decision unit 121 may also construct the quantization control unit in some cases.

The digital dynamic image input terminal 101 inputs a digital dynamic image signal and outputs it to the MC unit 102. The MC unit 102 creates a local decode image based on a signal input from the reverse quantization unit 111 and outputs the local decode image and a difference in an original image input from the digital dynamic image input terminal 101 to the DCT unit 103. The DCT unit 103 DCT-operates a signal input from the MC unit 102 and outputs it to the first quantization unit 104. The first quantization unit 104 multiplies a two-dimensional frequency component signal input from the DCT unit 103 by 16 and divides it by a matrix element that corresponds to a quantization matrix, then outputs the result to the frame memory 105. The frame memory 105 sequentially outputs a signal input from the first quantization unit 104 to the second quantization unit 106 and stores it in the memory. The frame memory 105 outputs a one-picture signal to the second quantization unit and stores it in the memory, then re-outputs the one-picture signal stored in the memory to the second quantization unit 106. That is, the frame memory 105 outputs the same one-picture signal input from the first quantization unit 104 to the second quantization unit 106 twice.

Hereupon, the capacity of the frame memory 105 is described. The digital dynamic image signal handled in the MPEG-2 Standard is 8-bit precision in a brightness component and a color difference component. Then the signal of this 8-bit precision is compensated for motion by the MC unit 102 and is set to 9-bit precision. Next, a DCT operation is performed for the signal of this 9-bit precision by the DCT unit 103. However, since the DCT operation is a real operation, the operation result is represented in 12-bit precision to secure ample precision. Then when the result is multiplied by 16 by the first quantization unit 104, the signal is set to the 16-bit precision. A quantization matrix can also be specified by embedding the matrix in a stream. Unless specified otherwise, a fixed matrix defined in the MPEG-2 Standard is used. The matrix element of a fixed quantization matrix defined in the MPEG-2 Standard is eight even for the lowest value, that is, three bits. If the quantization matrix is set to n (≧ 3) bits, the output signal of the first quantization unit 104 is 16 - n (< 13) bits.

Accordingly, the capacity of the frame memory 105 necessary for storing the output signal of the first quantization unit 104 is set to 12 bits when n is 4 and is identical with the signal before the first quantization. The memory capacity is set to 11 bits when n is 5 and can be reduced by about 8 percent. The memory capacity is set to ten bits when n is 6 and can be reduced by about 17 percent. The capacity of the memory necessary for storing the output signal of the first quantization unit 104 can be reduced by setting the matrix element of the quantization matrix to a larger value.

As described above, since the conversion table from a quantization scale code to a quantization scale in which the quantization scale is set to the value twice the quantization scale code is used in all pictures, the quantization scale is set to a value of 2 or more. The binary decimal place of the division result after the first quantization processing does not become subject to rounding off after the second quantization processing and therefore need not be stored. However, when another quantization scale is used, and, in particular, the quantization scale is set to less than 2, since the binary decimal place of the division result after the first quantization processing becomes subject to rounding off after the second quantization processing, the binary decimal place need be stored.

Returning to Fig. 1, the second quantization unit 106 inputs a signal after the first quantization from the frame memory 105 and divides it by a quantization scale instructed by the quantization control unit 120, then rounds off the residue. As a result, when the absolute value exceeds 255, the absolute value is set to 255 and output to the VLC 107. The VLC unit 107 performs variable length coding of a signal input from the second quantization unit 106 and outputs a code amount generated for every macro block to the target value decision unit 121.

The second quantization unit 106 inputs the same picture signal from the frame memory 105 twice and performs quantization processing for each signal. The VLC unit 107 also inputs the same picture signal from the second quantization unit 106 twice and performs variable length coding for each signal twice.

The quantization control unit 120 instructs the same quantization scale to the second quantization unit 106 in all macro blocks in a picture at the time of the first quantization of the second quantization unit 106. The first quantization is the processing for deciding a target code amount for every macro block and the quantization scale can use any value. In the first embodiment, for example, 2 that is the minimum value of the quantization scale is used. The target value decision unit 121, at the time of the first variable length coding, stores a code amount generated for every macro block and accumulates the code amounts generated in all macro blocks, then calculates the code amount generated in the picture. The target value unit 121 distributes the target code amount for every picture to each macro block in the picture according to the code amount generated in the picture and in every macro block at the first variable length coding, and decides the target code amount for every macro block. The target code amount of each macro block is obtained by multiplying the ratio of the code amount generated in the picture and the code amount generated in each macro block by the target code amount for every picture.

The target value decision unit 121, at the time of the second quantization of the second quantization unit 106, outputs the target code amount for every macro block to the quantization control unit 120. The quantization control unit 120, at the time of the second quantization processing of the second quantization unit 106, compares the target code amount for every macro block input from the target value decision unit 121 with a generated code amount for every macro block input from the VLC unit 107 and feeds back the difference to the target value of a subsequent macro block. If the generated code amount is larger than the target code amount, the quantization scale of the next macro block is corrected in accordance with the difference so as to increase, and if the generated code amount is smaller than the target code amount, the quantization scale of the next macro block is corrected in accordance with the difference so as to decrease, thereby performing feedback control. Although the quantization scale of the first macro block in a picture may be any value, for example, 32 that is the intermediate value between the minimum value 2 and the maximum value 64 is used.

For example, regarding the processing of the k-th (k: positive integer of k < n) macro block when one picture is split into n (n: positive integer) macro blocks, the quantization scale uses 32 for k = 1, and, in other cases, the generated code amount and the k-th target code amount of the k-th macro block are compared and the quantization scale of the ( k+ 1)-th macro block is corrected in accordance with the difference.

The quantization scale of the first macro block is specified as 32 here, but it is not limited to this value and any value can be used as described above. In particular, the quantization scale can also be obtained from the previous picture (preceding picture of the same type when the types (I, P; and B) of the previous picture differ). For example, the quantization scale of the last macro block of the previous picture, the average of the quantization scale of the latter half macro block of the previous picture or the average of the quantization scales of all macro blocks of the previous picture can be used.

The VLC unit 107, at the time of the second variable length coding, outputs the code amount generated for every macro block to the target value decision unit 121 and outputs the coded and generated bit stream to the sending buffer 108. The sending buffer 108 outputs the bit stream input from the VLC unit 107 to the bit stream output terminal 109. The bit stream output terminal 109 outputs the bit stream to disk media, such as a DVD-RAM, DVD-RW, DVD-R, and hard disk, a tape medium such as a D-VHS, communication equipment, and a multiplexer that conforms to the MPEG-2 System Standard.

The target value decision unit 121, when the VLC unit 107 completes the second variable length coding of all the macro blocks in a picture, decides the target code amount of the next picture from the code amount for every macro block input from the VLC unit 107 and the quantization scale the quantization control unit 120 outputs, and outputs it to the quantization control unit 120.

The reverse quantization unit 110 reversely quantizes a sigrial input from the second quantization unit 106 and outputs it to the inverse DTC unit 111. The inverse DTC unit 111 inversely DCT-operates a signal input from the reverse quantization unit 110 and outputs it to the MC unit 102.

According to the first embodiment, the distribution of a target code amount to each macro block is optimized, a code amount is controlled, and the picture quality in a picture is made uniform. Further, since the quantization processing to be executed repetitively is the division by a quantization scale, a value (bit width) of a divisor is reduced and a throughput required for the division is reduced compared with regular quantization in which the division is performed in the quantization step assigned by the product of a quantization matrix and a quantization scale. Specifically, the quantization matrix obtains a value of 256 steps (8 bits) and the quantization scale obtains a value of 32 steps (5 bits). Accordingly, to control the code amount, the division is repeated by a 13-bit divisor in the method of making division according to the quantization step, whereas the throughput is greatly reduced since the division can be repeated by a 5-bit divisor according to the method of making division by the quantization scale. Further, the memory capacity can be reduced if the matrix element of the quantization matrix exceeds four bits compared with the case where it is set before quantization processing.

Next, a second embodiment of the present invention is described. The second embodiment applies a means for solving the first problem to an MPEG-2 real-time coding apparatus by an ordinary fixed bit rate control system.

The second embodiment uses the same quantization scale in each macro block in a picture. By using the same quantization scale, the degree of quantization distortion is made uniform and the picture quality in a picture is made uniform. On the other hand, from the viewpoint of code amount control, the code amount generated in the picture need match the target code amount of the picture. When the same quantization scale is used in each macro block in the picture, the quantization scale that generates the code amount most approximate to the target code amount of the picture must be decided. To solve this problem, a generated code amount estimation system is provided, a generated code amount for the quantization scale is estimated, and the quantization scale that generates the code amount most approximate to the target code amount is selected.

Fig . 2 shows a block diagram of the second embodiment. The dynamic image compression coding apparatus is provided with the digital dynamic image input terminal 101, the MC unit 102, the DCT unit 103, the first quantization unit 104, the frame memory 105, the second quantization unit 106, the VLC unit 107, the sending buffer 108, the bit stream output terminal 109, the reverse quantization unit 110, the inverse DCT unit 111, the quantization control unit 120, the target value decision unit 121, a second quantization unit 201, a second quantization unit 202, a second quantization unit 203, and a second quantization unit 204, 201 to 204 being estimation system second quantization means, and a VLC unit 205, a VLC unit 206, a VLC unit 207, and a VLC unit 208, 205 to 208 being estimation system coding means. The part common to the first embodiment is shown by affixing the same symbol. Since the operation of each section of the digital dynamic image input terminal 101, the MC unit 102, the DCT unit 103, the first quantization unit 104, the sending buffer 108, the bit stream output terminal 109, the reverse quantization unit 110, and the inverse DCT unit 111 is the same operation as that in the first embodiment, the description is omitted. The part of which the operation differs from the first embodiment is described below.

The frame memory 105 sequentially outputs a signal input from the first quantization unit 104 to the second quantization units 201, 202, 203, and 204 and stores it in the memory. After the frame memory 105 outputs a one-picture signal to the second quantization units 201, 202, 203, and 204 and stores it in the memory, it outputs the one-picture signal stored in the memory to the second quantization unit 106. That is, the frame memory 105 first outputs the same one-picture signal input from the first quantization unit 104 to the second quantization units 201, 202, 203, and 204 and subsequently outputs it to the second quantization unit 106.

The second quantization units 201, 202, 203, and 204 perform the second quantization processing of image data input from the frame memory 105 using each different quantization scale and outputs the result to the VLC units 205, 206, 207, and 208 respectively. The VLC units 205, 206, 207, and 208 perform the variable length coding to each input signal and output a generated code amount to the quantization control unit 120.

Four different numbers among integers 2 to 62 can be selected for the quantization scale used in the second quantization units 201, 202, 203, and 204. For example, 2 is selected for the second quantization unit 201, 16 is selected for the second quantization unit 202, 32 is selected for the second quantization unit 203, and 62 is selected for the second quantization unit 204. In this case, the quantization scale is an estimation system quantization scale used for the estimation of a generated code amount.

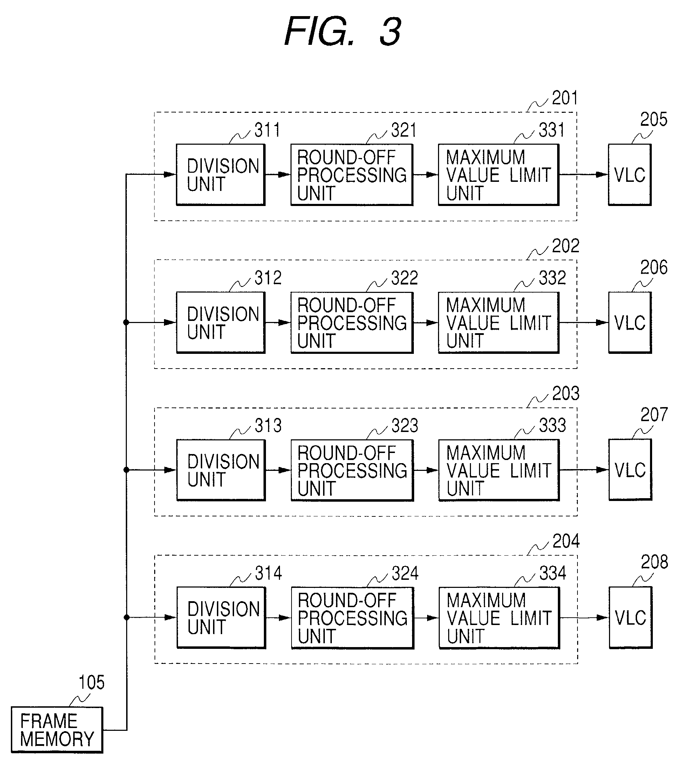

Fig. 3 is a block diagram showing the second quantization units 201, 202, 203, and 204. The second quantization unit 201 is provided with a division unit 311, a round-off processing unit 321, and a maximum value limit unit 331. The second quantization unit 202 is provided with a division unit 312, a round-off processing unit 322, and a maximum value limit unit 332. The second quantization unit 203 is provided with a division unit 313, a round-off processing unit 323, and a maximum value limit unit 333. The second quantization unit 204 is provided with a division unit 314, a round-off processing unit 324, and a maximum value limit unit 334. The division units 311, 312, 313, and 314 divide the image data input from the frame memory 105 by 2, 16, 32, and 62 respectively, and outputs the result to the round-off processing units 321, 322, 323, and 324. The round-off processing units 321, 322, 323, and 324 round off the fraction part of the division result and outputs it to the maximum value limit parts 331, 332, 333, and 334 respectively. The maximum value limit units 331, 332, 333, and 334 output an output signal to the VLC units 205, 206, 207, and 208 as it is when the absolute value of an input signal is equal to or less than 255. The maximum value limit units output the signal to the VLC units 205, 206, 207, and 208 after they convert the absolute value of the input signal to 255 when the absolute value exceeds 255.

The quantization control unit 120, when the second quantization and variable length coding for all the macro blocks in a picture are completed, compares the target code amount of the picture input from the target value decision unit 121 with the code amount of the picture input from the VLC units 205, 206, 207, and 208 and estimates a quantization scale that generates the code amount most approximate to the target code amount.

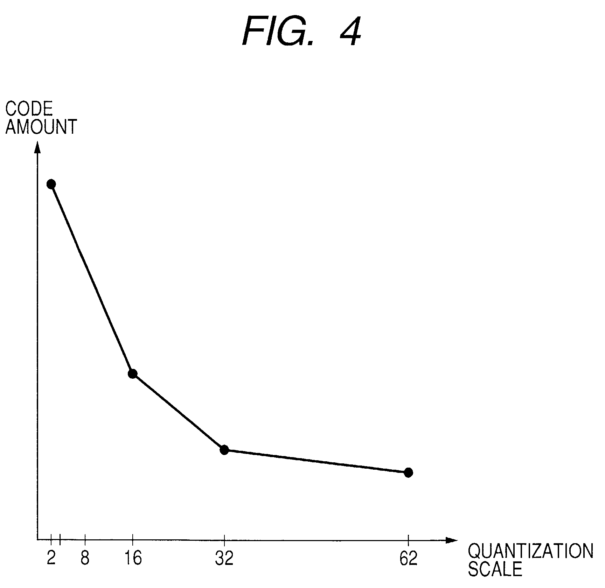

Fig. 4 shows a graph for estimating the quantization scale that generates the code amount most approximate to the target code amount. The horizontal axis of Fig. 4 is the quantization scale and the vertical axis is the code amount generated in the picture. The code amount of the picture generated for the quantization scales 2, 16, 32, and 62 is known information and shown in the graph using a black circle. Since the code amount of the picture is unknown when the quantization scale other than 2, 16, 32, and 62 is used, the code amount is estimated by interpolating points 2, 16, 32, and 62. In Fig. 4, each point is interpolated using a broken line to easily execute operation. In this example, although the code amount is estimated by the broken line interpolation, another interpolation can also be used. For example, the code amount can also be estimated using the spline interpolation or the like. When the quantization control unit 120 generates the code amount most approximate to the target code amount after it estimates the code amount for all quantization scales from 2 to 62, a quantization scale to be estimated is selected and output to the second quantization unit 106.

The second quantization unit 106 sequentially reads the data after the first quantization from the frame memory 105 after the quantization scale decision unit 120 decides a quantization scale, and performs the second quantization for all macro blocks in a picture using the quantization scale the quantization control unit 120 outputs and outputs the data to the VLC unit 107.

The target value decision unit 121 decides the target code amount of the next picture from the code amount for every macro block input from the VLC unit 107 and the quantization scale output by the quantization control unit 120 and outputs it to the quantization control unit 120.

According to the second embodiment, a code amount can be controlled by providing a generated code amount estimation system and estimating a code amount that is generated for a quantization scale, then selecting the quantization scale that generates the code amount most approximate to the target code amount. Further, the degree of quantization distortion is made uniform and the picture quality in a picture is made uniform by using the same quantization scale in the picture.

Next, a third embodiment of the present invention is described. The third embodiment applies a means for solving a first problem and a means for solving a second problem to an MPEG-2 real-time coding apparatus of an ordinary fixed bit rate control system.

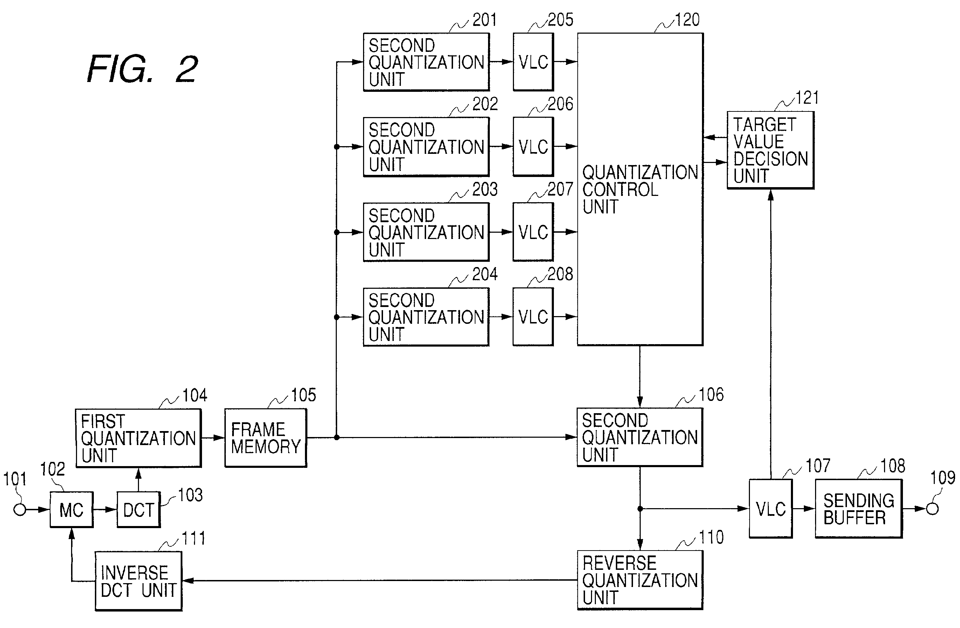

The entire configuration of the third embodiment is the same configuration of Fig. 2 that is the block diagram of the second embodiment, but differs in the configuration of the second quantization units 201, 202, 203, and 204. The description of the operation common to the second embodiment is omitted and only the operation that differs from that of the second embodiment is described.

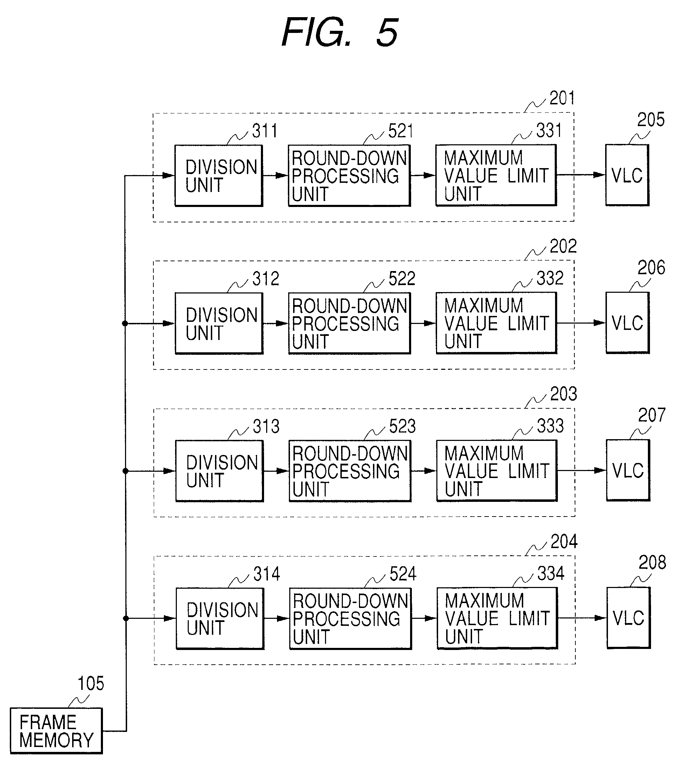

Fig. 5 is a block diagram showing the second quantization units 201, 202, 203, and 204. The second quantization unit 201 is provided with the division unit 311, a round-down processing unit 521, and the maximum value limit unit 331. The second quantization unit 202 is provided with the division unit 312, a round-down processing unit 522, and the maximum value limit unit 332. The second quantization unit 203 is provided with the division unit 313, a round-down processing unit 523, and the maximum value limit unit 333. The second quantization unit 204 is provided with the division unit 314, a round-down processing unit 524, and the maximum value limit unit 334. The part common to the second embodiment is shown by affixing the same symbol. The division units 311, 312, 313, and 314 divide the image data input from the frame memory 105 by 2, 16, 32, and 62 respectively and output it respectively to the round-down processing units 521, 522, 523, and 524. The round-down processing units 521, 522, 523, and 524 round down the fraction part of the division result and output it to the maximum value limit units 331, 332, 333, and 334. The maximum value limit units 331, 332, 333, and 334 output an input signal to the VLC units 205, 206, 207, and 208 as it is when the absolute value of the input signal is equal to or less than 255. The maximum value limit units output it to the VLC units 205, 206, 207, and 208 after they convert the absolute value of the input signal to 255 when the absolute value exceeds 255.

The third embodiment corresponds to an embodiment in which the round-off processing units 321, 322, 323, and 324 of the second embodiment are substituted for the round-down processing units 521, 522, 523, and 524 respectively. By substituting round-off processing for round-off processing, the output result of the second quantization unit generates an error within the range of ±1 compared with the case of the second embodiment, but a generated code amount is hardly affected. The estimation of the generated code amount is hardly affected, either. The first coding in two types of path coding is performed for estimating the code amount and does not generate a bit stream for practically recording the code amount.
Accordingly, even if the round-down processing is performed instead of the round-off processing of a residue in the quantization processing of the first coding among the two types of path coding, no problem is arisen. On the other hand, when the throughputs of the round-off processing and round-down processing are compared, the round-off processing adds 1 to the least significant bit of a valid digit in accordance with the most significant bit of an invalid digit and extracts the valid digit, whereas the round-down processing extracts the valid digit as it is. The round-down processing is smaller in the throughput than the round-off processing. Accordingly, the dynamic image compression coding apparatus of the third embodiment can reduce the throughput necessary for estimating a generated code amount compared with the second embodiment.

Next, a fourth embodiment of the present invention is described. The fourth embodiment applies a means for solving a first problem and a means for solving a second problem to an MPEG-2 real-time coding apparatus of an ordinary fixed bit rate control system.

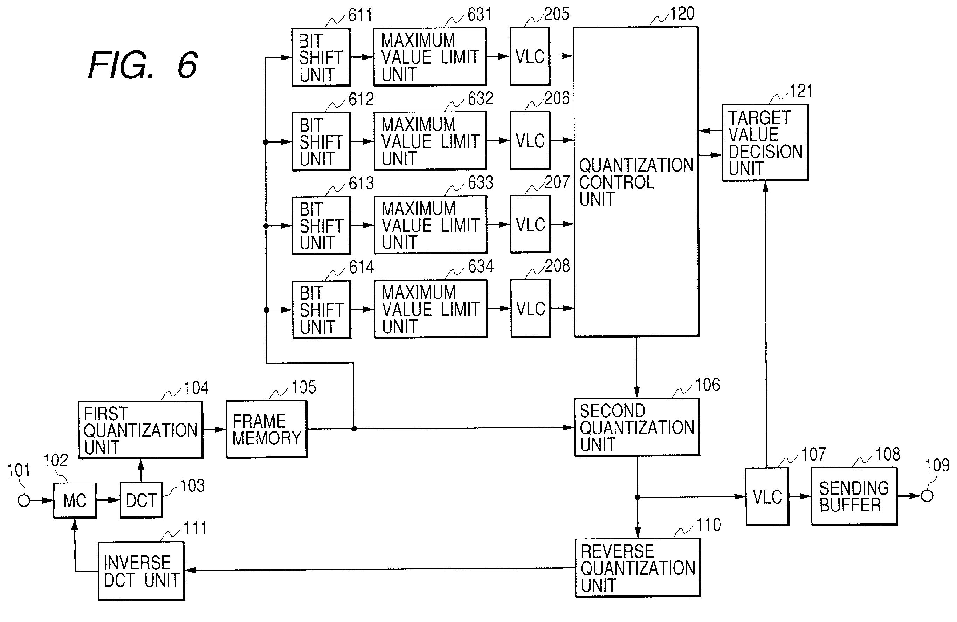

Fig. 6 shows a block diagram of the dynamic image compression coding apparatus according to the fourth embodiment. The fourth embodiment is provided with the digital dynamic image input terminal 101, the MC unit 102, the DCT unit 103, the first quantization unit 104, the frame memory 105, the second quantization unit 106, the VLC unit 107, the sending buffer 108, the bit stream output terminal 109, the quantization control unit 120, the target value decision unit 121, the VLC unit 205, the VLC unit 206, VLC unit 207, the VLC unit 208, a bit shift unit 611, a bit shift unit 612, a bit shift unit 613, a bit shift unit 614, a maximum value limit unit 631, a maximum value limit unit 632, a maximum value limit unit 633, and a maximum value limit unit 634. The part common to the second embodiment is shown by affixing the same symbol. Since the operation of each unit of the digital dynamic image input terminal 101, the MC unit 102 , the DCT unit 103, the first quantization unit 104, the sending buffer 108, the bit stream output terminal 109, the reverse quantization unit 110, and the inverse DCT unit 111 is the same operation as that in the second embodiment, the description is omitted. The part of which the operation differs from that of the second embodiment is described below.

The frame memory 105 sequentially outputs a signal input from the first quantization unit 104 to the bit shift units 611, 612, 613, and 614 and stores it in the memory. After the frame memory 105 outputs a one-picture signal to the bit shift units 611, 612, 613, and 614 and stores it in the memory, it outputs the one-picture signal stored in the memory to the second quantization unit 106. That is, the frame memory 105 first outputs the same one-picture signal input from the first quantization unit 104 to the bit shift units 611, 612, 613, and 614 and then outputs it to the second quantization unit 106.

The bit shift units 611, 612, 613, and 614 right-bit-shift the image data input from the frame memory 105 in a different amount respectively and output the result to the maximum value limit units 631, 632, 633, and 634 respectively. The maximum value limit units 631, 632, 633, and 634 output an input signal to the VLC units 205, 206, 207, and 208 as it is when the absolute value of the input signal is equal to or less than 255. The maximum value limit units output the input signal to the VLC units 205, 206, 207, and 208 after they convert the absolute value of the input signal to 255 when the absolute value exceeds 255. The VLC units 205, 206, 207, and 208 perform variable length coding of a bit-shifted signal and output a generated code amount to the quantization control unit 120.

The quantization processing of multiple quantization scales is performed to correctly estimate a code amount generated every macro block. If the code amount can correctly be estimated, no problem is arisen even if a quantization scale is freely selected. Accordingly, the quantization scale used for the estimation is the power of 2. The division processing in which the power of 2 is a divisor can be implemented by the right bit shift operation. The right bit shift operation can be implemented with a far small throughput compared with the regular division processing that is implemented by repeating subtraction.

Four different integers 0 to 6 can be selected for the bit shift amount used in each of the bit shift units 611, 612, 613, and 614. For example, the bit shift unit 611 is a one-bit shift, the bit shift unit is a four-bit shift, the bit shift unit 613 is a five-bit shift, and the bit shift unit 614 is a six-bit shift. Performing these right bit shifts is equivalent to the fact that division is performed by 2, 16, 32, and 64 respectively and a residue is rounded down. That is, the fourth embodiment performs almost the same operation as the case where the quantization scale used as a divisor in the division units 311, 312, 313, and 314 of the third embodiment is 2, 16, 32, and 64 respectively.

The quantization control unit 120, when the second quantization and variable length coding for all the macro blocks in a picture are completed, compares the target code amount of the picture input from the target value decision unit 121 with the code amount of the picture input from the VLC units 205, 206, 207, and 208 and estimates the quantization scale that generates the code amount most approximate to the target code amount.

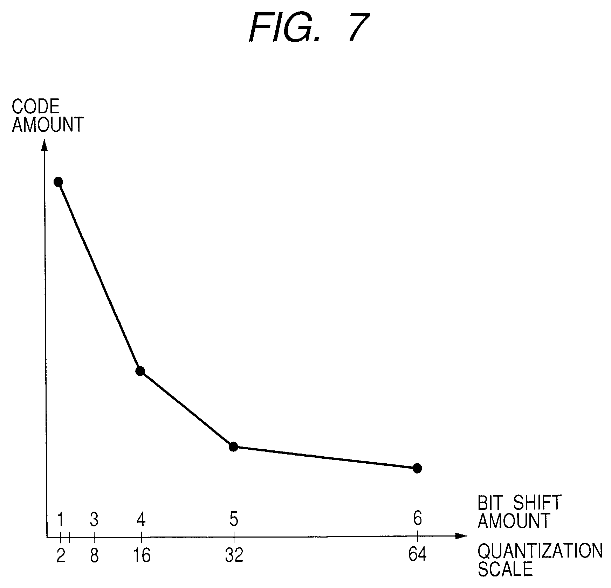

Fig. 7 shows a graph for estimating the quantization scale that generates the code amount most approximate to the target code amount. The horizontal axis of Fig. 7 is the quantization scale and the vertical axis is the code amount generated in the picture. The code amount of the picture generated for the quantization scales 2, 16, 32, and 64 is known information and shown in the graph using a black circle. Since the code amount of the picture is unknown when the quantization scale other than 2, 16, 32, and 64 is used, the code amount is estimated by interpolating points 2, 16, 32, and 64. In Fig. 7, each point is interpolated using a broken line to easily execute operation. In this example, although the code amount is estimated by the broken line interpolation, another interpolation can also be used. For example, the code amount can also be estimated using the spline interpolation or the like. When the quantization control unit 120 generates the code amount most approximate to the target code amount after it estimates the code amount for all quantization scales from 2 to 62, a quantization scale to be estimated is selected and output to the second quantization unit 106.

The second quantization unit 106 sequentially reads the data after the first quantization from the frame memory 105 after the quantization scale decision unit 120 decides a quantization scale, and performs the second quantization for all macro blocks in a picture using the quantization scale the quantization control unit 120 outputs and outputs the data to the VLC unit 107.

The target value decision unit 121 decides the target code amount of the next picture from the code amount for every macro block input from the VLC unit 107 and the quantization scale output by the quantization control unit 120 and outputs it to the quantization control unit 120.

Since the fourth embodiment substitutes division processing for the bit shift processing compared with the third embodiment, the throughput for estimating a generated code amount is greatly reduced.

Next, a fifth embodiment of the present invention is described. The fifth embodiment applies a means for solving a first problem to an MPEG-2 real-time coding apparatus of an ordinary fixed bit rate control system.

The second embodiment, apart from the second quantization unit 106 and the VLC unit 107 used for generating a bit stream, is provided with four second quantization units and four VLC units for estimating a code amount generated for a quantization scale. However, when the second quantization unit 106 and the VLC unit 107 operate at high speed, the code amount generated for the quantization scale can be estimated by operating the second quantization unit 106 and the VLC unit 107 multiple times during a one-picture period. The fifth embodiment obtains the same effect as the second embodiment by operating the second quantization unit 106 and the VLC unit 107 at high speed multiple times without adding a special means for estimating the code amount.

The fifth embodiment uses the same quantization scale in each block in a picture. By using the same quantization scale, the degree of quantization distortion is made uniform and the picture quality of the picture is made uniform. On the other hand, from the viewpoint of code amount control, the code amount generated in the picture need match the target code amount of the picture. When the same quantization scale is used in each macro block in the picture, the quantization scale that generates the code amount most approximate to the target code amount of the picture must be decided.

The fifth embodiment decides a quantization scale using what is called a "pincer attack" method. In MPEG-2, when the same data is encoded, a code amount is reduced as the quantization scale increases . When the code amount obtained by performing coding using a quantization scale Qa is smaller than the target code amount and the code amount obtained by performing coding using a quantization scale Qb is larger than the target code amount, the quantization scale that generates the code amount most approximate to the target code amount exists between Qa and Qb. If the code amount obtained by performing coding using the intermediate value (Qa + Qb)/2 of Qa and Qb is larger than the target code amount, the quantization scale that generates the code amount most approximate to the target code amount exists between Qa and (Qa + Qb)/2. If the code amount obtained by performing coding using the intermediate value (Qa + Qb)/2 of Qa and Qb is smaller than the target code amount, the quantization scale that generates the code amount most approximate to the target code amount exists between (Qa + Qb)/2 and Qb. Thus, when it is known that the quantization scale that generates the target amount most approximate to the target code amount exists between two different quantization scales, the range where the quantization scale that generates the code amount most approximate to the target code amount exists can be limited to half the original range by performing coding using the intermediate value of these two different quantization scales and obtaining the code amount. By repeating this, the range where the quantization scale that generates the code amount most approximate to the target code amount exists is narrowed. Finally, the quantization scale that generates the code amount most approximate to the target code amount can be obtained. In MPEG-2, since the quantization scale has 32 values, the quantization scale that generates the code amount most approximate to the target code amount of the picture can correctly be decided by encoding the same picture five times using the pincer attack method.

The configuration of the fifth embodiment is quite the same configuration as the first embodiment and the block diagram is Fig. 1. The part of which the operation differs from that of the first embodiment is described below.

The frame memory 105 sequentially outputs a signal input from the first quantization unit 104 to the second quantization unit 106 and stores it in the memory. After the frame memory 105 outputs a one-picture signal to the second quantization unit and stores it in the memory, it outputs the one-picture signal stored in the memory to the second quantization unit 106 five times. That is, the frame memory 105 outputs the same one-picture signal input from the first quantization unit 104 to the second quantization unit 106 six times. The second quantization unit 106 inputs the same picture signal from the frame memory 105 six times and performs quantization processing six times accordingly. The VCL unit 107 also inputs the same picture signal from the second quantization unit 106 and performs variable length coding six times accordingly.

The quantization control unit 120 instructs 32 that is the intermediate even number between the minimum value 2 and the maximum value 62 of the quantization scale to the second quantization unit 106 when the second quantization unit 106 performs the first quantization.

The quantization control unit 120 accumulates a code amount generated in all macro blocks and calculates a code amount generated in a picture. The quantization control unit 120 compares the target code amount of the picture input from the target value decision unit 121 with the code amount generated in the picture every time the second quantization and variable length coding for all the macro blocks in the picture are completed and resets a quantization scale. For example, when the first second quantization and variable coding are completed, if the generated code amount is larger than the target code amount, the quantization scale that generates the code amount most approximate to the target amount is judged to exist between 32 and 62, and a new quantization scale is set to the intermediate even number 48 between 32 and 62. If the generated code amount is smaller than the target code amount, the quantization scale that generates the code amount most approximate to the target code amount is judged to exist between 2 and 32, and a new quantization scale is set to the intermediate even number 16 between 2 and 32. After the second quantization and variable length coding are repeated five times, the quantization control unit 121 decides the quantization scale that generates the code amount most approximate to the target code amount.

After the quantization control unit 121 decides the quantization scale that generates the code amount most approximate to the target code amount, the second quantization unit 106 performs the second quantization processing by re-inputting the data after the first quantization from a frame memory and fixing the quantization scale instructed by the quantization control unit 121 to the data of all the macro blocks in a picture. At this time, the second quantization unit 106 outputs the data after the second quantization to the VLC unit 107 and the reverse quantization unit 108. The VLC unit 107 performs variable length coding of the data input from the second quantization unit 106 and calculates the code amount that is generated every macro block, then outputs it to the target value decision unit 121. At this time, the VLC unit 107 not only outputs the code amount but also outputs a bit stream obtained by coding to the sending buffer 108.

The target value decision unit 121 decides the target code amount of the next picture from the code amount for every macro block input from the VLC unit 107 and the quantization scale the quantization control unit 120 outputs when the VLC unit 107 completes the sixth variable length coding of all the macro blocks in a picture and outputs it to the quantization control unit 120.

The fifth embodiment can obtain the same effect as the second embodiment without adding a special means for estimating a code amount by operating the second quantization unit 106 and the VLC unit 107 at high speed multiple times.

Next, a sixth embodiment in which the present invention applies to a hard disk recorder (hereinafter referred to as a "HD recorder") is described. Although the case where the first embodiment applies to the HD recorder is described here, this case can necessarily apply to even another embodiment in the same manner. Further, the recording of an analog broadcast that is one of the applications of the HD recorder is described here.

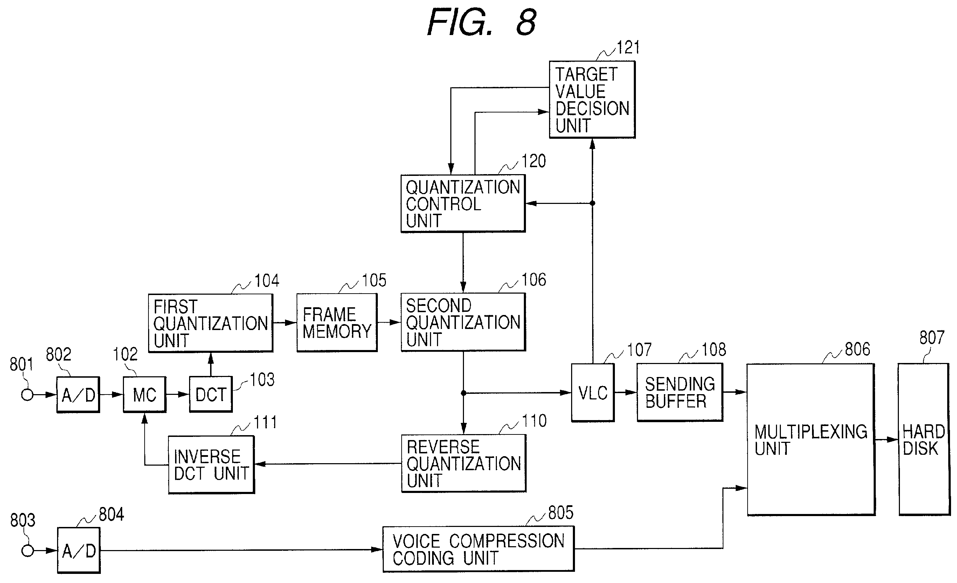

Fig. 8 is a block diagram showing the HD recorder of the sixth embodiment. The HD recorder of Fig. 8 is provided with the MC unit 102, the DCT unit 103, the first quantization unit 104, the frame memory 105, the second quantization unit 106, the VLC unit 107, the sending buffer 108, the reverse quantization unit 110, the inverse DCT unit 111, the quantization control unit 120, the target value decision unit 121, an analog image input terminal 801, an A/D converter 802, an analog voice input terminal 803, an A/D converter 804, a voice compression coding unit 805, a multiplexing unit 806, and a hard disk 807. The part common to the first embodiment is shown by affixing the same symbol. Since the operation of each unit of the MC unit 102, the DCT unit 103, the first quantization unit 104, the frame memory 105, the second quantization unit 106, the VLC unit 107, the sending buffer 108, the reverse quantization unit 110, the inverse DCT unit 111, the quantization control unit 120, and the target value decision unit 121 is the same operation of the first embodiment, the description is omitted. The part of which the operation that differs from that of the first embodiment is described below.

First, an analog broadcast is received by an analog television tuner not shown and an analog image signal and an analog voice signal are output. The analog image input terminal 801 inputs the analog image signal and outputs it to the A/D converter 802. The A/D converter 802 A/D-converts the input analog image signal and outputs it to the MC unit 102. Subsequently, in the same manner as the first embodiment, a dynamic image input to the MC unit 102 is compressed and encoded and an image bit stream is output from the sending buffer 108 to the multiplexing unit 806.

On the other hand, regarding a voice, the analog voice input terminal 803 inputs the analog voice signal and outputs it to the A/D converter 804. The A/D converter 804 A/D converts the input analog voice signal and outputs it to the voice compression coding unit 805. The voice compression coding unit 805 compresses and encodes an input digital voice signal after A/D conversion and outputs a voice bit stream to the multiplexing unit 806. For the compressed coding of the voice, an ordinary conventional art may be used.

The multiplexing unit 806 multiplexes an image bit stream output from the sending buffer 108 and a voice bit stream output from the voice compression coding unit 805. Also for this multiplexing, an ordinary conventional art may be used. Then the multiplexed bit stream is recorded on the hard disk 807.

In this embodiment, the multiplexed bit stream is recorded on the hard disk 807, but it may also be recorded in an optical disk drive, such as a DVD-RAM, DVD-RW, DVD-R, and a magnetic tape recorder such as a D-VHS. For a specific means (recording means) that records the multiplexed bit stream in these media, an ordinary conventional art may be used.

According to the sixth embodiment, since a control amount is suitably controlled in the same manner as the first embodiment, high picture quality recording in which the picture quality in a picture is made uniform is enabled. Further, when recording time is known, such as reserved recording, the code amount can be controlled in accordance with the remaining amount of an HD highly maintaining picture quality so that the image recording cannot be completed halfway due to the remaining capacity insufficiency of the HD.

The first to six embodiments have been described above. The present invention is not limited to these embodiments and also includes these modifications naturally. Further, in each of the embodiments, each unit in each configuration is described as a hardware resource. That is, for example, in the first embodiment, the MC unit 102, the DCT unit 103, the first quantization unit 104, the second quantization unit 106, the VLC unit 107, the reverse quantization unit 110, the inverse DCT unit 111, the quantization unit 120, and the target value decision unit 121 is implemented as an MC circuit 102, a DCT circuit 103, a first quantization circuit 104, a second quantization circuit 106, a VLC circuit 107, a reverse quantization circuit 110, an inverse DCT circuit 111, a quantization control circuit 120, and a target value decision circuit 121. Further, for example, in the first embodiment, since each of another unit except for the frame memory 105 is implemented by a one-chip LSI circuit and the frame memory 105 has a large memory capacity required for storing one-screen image data, an SDRAM ought to be used. In this case, a signal after first quantization is input from the LSI to the SDRAM and the signal after the first quantization is stored in the SDRAM, and then the signal after the first quantization is output from the SDRAM to the LSI multiple times. This case also applies to the other embodiments.

On the other hand, each of the embodiments can also be executed by software. For example, in the case of the first embodiment, in a computer having an operation unit and a storage unit, the operation unit functions as the MC unit 102, the DCT unit 103, the first quantization unit 104, the second quantization unit 106, the VLC unit 107, the reverse quantization unit 110, the inverse DCT unit 111, the quantization control unit 120, and the target value decision unit 121 and performs each operation processing described above. The storage unit functions as the frame memory 105, the sending buffer 108, and the target value decision unit 121 and stores a signal after the first quantization, a generated code amount or target code amount, and an output signal. In the other embodiments as well, the operation unit of the computer operates the part related to operation processing and the storage unit of the computer ought to store the part related to the storage. To make the operation unit and the storage unit function as described above respectively, the program that makes the computer execute the procedure is installed in the computer. Hereupon, this program is recorded on a recording medium of which data can be read on the computer such as a CD-ROM to be distributed, or distributed by communication via a network such as the Internet.

As described above, the present invention can reduce a throughput to be executed when a code amount is controlled.

## Claims

1. A dynamic image compression coding apparatus that performs quantization processing and coding processing to a dynamic image signal, wherein the quantization processing is split into two steps of first quantization that performs division using a quantization matrix and second quantization that performs division using a quantization scale and, a code amount is controlled by controlling the quantization scale.

2. A dynamic image compression coding apparatus that performs quantization processing and coding processing to a dynamic image signal, wherein the quantization processing is split into two steps of first quantization that performs division using a quantization matrix and second quantization that performs division using a quantization scale, a storage means that stores a signal after the first quantization between the first quantization and the second quantization is provided, and a code amount is controlled by repeating the second quantization multiple times.

3. A dynamic image compression coding apparatus, comprising:
a first quantization means that divides a dynamic image signal using a predetermined quantization matrix;
a storage means that stores an output signal of the first quantization means;
a second quantization means that divides an output signal of the storage means using a quantization scale;
a coding means that encodes the output signal of the second quantization means; and
a quantization control means that variably controls the quantization scale of the second quantization means based on a code amount of the output signal of the coding means.

4. The dynamic image compression coding apparatus according to claim 3, wherein the second quantization means and the coding means operate a plurality of times, and
the quantization control means variably controls the quantization scale of the second quantization means based on the code amount of the output signal of the coding means at each time.

5. The dynamic image compression coding apparatus according to claim 3, wherein the storage means outputs the output signal of the first quantization means twice,
the second quantization means divides the first output signal of the storage means by a first quantization scale and divide the second output signal of the storage means by a second quantization scale,
the coding means encodes the output signal of the second quantization means, and
the quantization control means variably controls the second quantization scale of the second quantization means based on the code amount of the signal that is divided by the first quantization scale by the second quantization means and encoded by the coding means.

6. The dynamic image compression encoding apparatus according to claim 3, wherein
the storage means outputs the output signal of the first quantization means twice,
in the first time,
the second quantization means divides a one-picture output signal of the storage means every macro block using the quantization scale,
the coding means encodes a one-picture output signal of the second quantization means every macro block, and
the quantization control means calculates a target code amount every macro block based on the code amount for every macro block of the output signal of the coding means, and
in the second time,
the second quantization means divides the output signal of the storage means for every macro block using the quantization scale,
the coding means encodes the output signal of the second quantization means every macro block, and
the quantization control means compares the code amount for every macro block of the output signal of the coding means with the target code amount for every the macro block and supply the quantization scale used by the second quantization means in the second time to the second quantization means.

7. A dynamic image compression coding apparatus, comprising:
a first quantization means that divides a dynamic image signal that is split into a plurality of macro blocks using a predetermined quantization matrix;
a storage means that stores a one-picture output signal of the first quantization means;
a second quantization means that divides an output signal of the storage means by a first quantization scale for each of the plurality of macro blocks;
a quantization control means that controls the quantization scale of the second quantization means;
a coding means that encodes the output signal of the second quantization means; and
a target code amount decision means that decides a target code amount for each of the plurality of macro blocks that are supplied to the quantization control means based on a code amount for each of the plurality of macro blocks of the output signal of the coding means, wherein
the second quantization means divides the output signal of the storage means for each of the plurality of macro blocks by the second quantization scale;
the coding means encodes the output signal of the second coding means; and
the quantization control means compares the code amount for each of the plurality of macro blocks of the output signal of the coding means with the target code amount for each of the plurality of macro blocks supplied by the target code amount decision means and control the second quantization scale of the second quantization means based on the comparison result.

8. A dynamic image compression coding apparatus, comprising:
a first quantization means that divides a one-picture dynamic image signal split into n pieces (n: optional positive integer) of macro blocks using a predetermined quantization matrix;
a storage means that stores a one-picture output signal of the first quantization means;
a second quantization means that divides an output signal of the storage means using a quantization scale;
a quantization control means that controls the quantization scale of the second quantization means;
a coding means that encodes an output signal of the second quantization means; and
a target code amount decision means that decides a target code amount for each of the macro blocks from a code amount of the output signal of the coding means, wherein
the storage means outputs the output signal of the first quantization means twice;
in the first time,
the second quantization means divides a first one-picture output signal of the storage unit for each of the macro blocks using a first quantization scale;
the coding means encodes a signal divided using the first quantization scale every the macro block; and
the target code amount decision means decides the target code amount for each of the macro blocks based on a total of the code amount for each of the macro blocks of the signal in which the signal divided using the first quantization scale is encoded and the one-picture code amount; and
in the second time,
the second quantization means divides the k-th (k: positive integer of k < n) macro block signal output from the storage means using a second quantization scale;
the coding means encodes the k-th macro block signal divided using the second quantization scale; and
the quantization control means compares the code amount of the signal in which the k-th macro block signal divided using the second quantization scale is encoded with the target code amount of the k-th macro block and variably control the second quantization scale used by the second quantization means for the division of the (k + 1) -th macro block signal based on the comparison result.

9. A dynamic image compression coding method, comprising the steps of:
performing first quantization that divides a dynamic image signal using a predetermined quantization matrix;
storing a signal divided in the step of performing the first quantization;
performing second quantization that divides, using a quantization scale, the signal divided in the step of the first quantization or a signal stored in the step of performing the storage;
encoding the signal divided in the step of performing the second quantization; and
variably controlling the quantization scale used in the step of performing the second quantization based on the code amount encoded in the step of encoding.

10. A dynamic image compression coding method in a dynamic image compression coding apparatus that comprises a first quantization means, a storage means, a second quantization means, a quantization control means, and a coding means, comprising the steps of:
allowing the first quantization means to divide a one-picture dynamic image signal split into n pieces (n:
optional positive integer) of macro blocks using a predetermined quantization matrix;
allowing the storage means to store a one-picture output signal of the first quantization means;
allowing the second quantization means to divide, using a first quantization scale, a one-picture signal output from the storage means for each of the macro blocks;
allowing the coding means to encode a signal divided using the first quantization scale for each of the macro blocks;
allowing the quantization control means to decide a target code amount for each of the macro blocks based on a total of a code amount every the macro block of a signal in which the signal divided using the first quantization scale is encoded and the one-picture code amount;
allowing the second quantization means to divide the k-th (k: positive integer of k < n) macro block signal output from the storage means using a second quantization scale;
allowing the coding means to encode the k-th macro block signal divided using the second quantization scale; and
allowing the quantization control means to compare the code amount of the signal in which the k-th macro block signal divided using the second quantization scale is encoded with the target code amount of the k-th macro block and variably control the second quantization scale used by the second quantization means for the division of the (k + 1 ) -th macro block signal based on the comparison result.

11. A dynamic image compression coding method in a computer having a storage means and an operation means, comprising the steps of:
allowing the operation means to perform first quantization that divides a dynamic image signal using a predetermined quantization matrix;
allowing the storage means to store a signal divided in the step of performing the first quantization;
allowing the operation means to perform, using a quantization scale, second quantization that divides the signal divided in the step of performing the first quantization or a signal stored in the step of performing the storage;
allowing the operation means to encode the signal divided in the step of performing the second quantization; and
allowing the operation means to variably control the quantization scale used in the step of performing the second quantization based on a code amount of the signal encoded in the step of performing the coding.

12. A computer program product stored on a computer readable medium for compressing and coding a dynamic image signal, said computer program product comprising:
code for a first quantization procedure that makes the operation means divide a dynamic image signal using a predetermined quantization matrix;
code for a storage procedure that makes the storage means store a signal divided in the first quantization procedure;
code for a second quantization procedure that, using a quantization scale, makes the operation means divide the signal divided in the first quantization procedure or a signal stored in the storage procedure;
code for a coding procedure that encodes a signal divided in the second quantization procedure; and
code for a quantization control procedure that variably controls the quantization scale used in the second quantization procedure based on a code amount of the signal coded in the coding procedure.

13. A dynamic image compression coding apparatus, comprising:
a first quantization means that divides a dynamic image signal using a predetermined quantization matrix;
a storage means that stores an output signal of the first quantization means;
a plurality of estimation-system second quantization means that divide an output signal of the storage means using a plurality of different estimation-system quantization scales;
a plurality of estimation-system coding means that encode the output signal of the plurality of estimation-system second quantization means;
a second quantization means that divides the output signal of the storage means using a quantization scale;
a coding means that encodes the output signal of the second quantization means; and
a quantization control means that variably controls the quantization scale based on a code amount of the output signal of the plurality of estimation-system coding means.

14. The dynamic image compression encoding apparatus according to claim 13, wherein the plurality of different estimation-system quantization scales are the power of 2 respectively, and the plurality of estimation-system second quantization means operate division that, using a bit shift, uses the plurality of different estimation-system quantization scales.

15. The dynamic image compression coding apparatus according to claim 13, wherein the plurality of estimation-system second quantization means round down a residue among the results from which the division is performed using the plurality of different estimation-system quantization scale.

16. A dynamic image compression coding recorder, comprising:
a first A/D converter to which an analog image signal is input and A/D-coverts the input analog image signal;
a motion compensation means that performs motion compensation to an output signal of the first A/D converter;
a DTC conversion means that DTC-converts an output signal of the motion compensation means;
a first quantization means that divides an output signal of the DCT conversion means using a predetermined quantization matrix;
a storage means that stores an output signal of the first quantization means;
a second quantization means that divides the output signal of the storage means using a quantization scale;
a coding means that encodes an output signal of the second quantization means;
a quantization control means that variably controls the quantization scale of the second quantization means based on a code amount of the output signal of the coding means;
a second A/D converter to which an analog voice signal is input and A/D-converts the input analog voice signal;
a voice compression coding means that compresses and encode an output signal of the second A/D converter;
a multiplexing means that multiplexes the output signal of the coding means and the output signal of the voice compression coding means; and
a recording means that records a signal multiplexed by the multiplexing means.
